# EUROPÄISCHE PATENTSCHRIFT

(11) **EP 3 199 394 B1**
(45) Veröffentlichungstag und Bekanntmachung des Hinweises auf die Patenterteilung: **05.07.2023**
(21) Anmeldenummer: 16002273.7
(22) Anmeldetag: 25.10.2016
(51) Int. Cl.: B60J 5/10, F16B 39/24, F16B 41/00

(54) **NUTZFAHRZEUGAUFBAU**
COMMERCIAL VEHICLE STRUCTURE
CARROSSERIE DE VÉHICULE UTILITAIRE

(30) Priorität: 29.01.2016 DE 102016000910
(43) Veröffentlichungstag der Anmeldung: 02.08.2017
(73) Patentinhaber: Fahrzeugwerk Krone Beteiligungs-GmbH, 48480 Spelle (DE)
(72) Erfinder: Reibe, Mathias, DE - 19243 Wittenburg (DE)
(74) Vertreter: Busse & Busse

(56) Entgegenhaltungen:
- DE-A1-102010 017 605
- DE-U1-202007 008 534
- JP-A- 2008 230 393
- JP-A- 2012 071 822
- US-A- 3 263 727
- US-A- 3 926 237
- US-A- 5 964 499

## Beschreibung

Die Erfindung bezieht sich auf einen Nutzfahrzeugaufbau mit Seitenwandungen, einer Stirnwand, einer Heckwand sowie mit zumindest einer über Türscharniere schwenkbewegliche, insbesondere in der Heckwand angeordneten Tür zur Begrenzung eines Laderaumes, wobei die Tür über die Türscharniere an einem Wandungsteil des Fahrzeugaufbaus festgelegt ist.

Türen von Nutzfahrzeugaufbauten, wie beispielsweise Türen von wärmegedämmten Sattelanhängern und Wechselkoffern, sind während einer Transportfahrt des Fahrzeuges zollsicher zu verschließen. Herkömmlicherweise wird dies durch eine Zollsicherungsausrüstung der Befestigung von Türscharnieren dadurch erzielt, indem eine formschlüssige Schweißverbindung vorgesehen ist. Dabei wird an einem Schraubenkopf einer Schraubverbindung zur Befestigung der Türscharniere an einem Wandungsteil ein Schweißpunkt oder eine Schweißnaht angebracht, der bzw. die eine Verdrehung der Schraube nach der Montage des Türscharniers an dem Wandungsteil verhindert. Das Verschweißen des Schraubenkopfes während eines Montagevorganges verursacht jedoch zusätzliche Arbeitsgänge und ist mithin montageaufwändig. Zudem führt die Verbindung unterschiedlicher Metalle zu elektrochemischen Spannungen und damit zu Korrosionserscheinungen. Des Weiteren erfordert ein Schweißvorgang einen nicht unerheblichen Aufwand an Nachbearbeitungsvorgängen während der Montage und macht eine Reinigung des Schweißbereiches notwendig. Zudem stellt die Fertigung einer Schweißverbindung bei der Montage eines Nutzfahrzeugaufbaus einen eher untypischen Fertigungsschritt dar, der die Bereitstellung entsprechender Schweißwerkzeuge und die Bereitstellung von entsprechendem geschulten Personal notwendig macht.

Aus der DE 10 2010 017 605 A1 oder der US 5,964,499 ist ein Nutzfahrzeugaufbau der eingangs genannten Art bekannt. Dabei ist eine aus zwei Türflügeln bestehende Fahrzeughecktür über jeweilige Scharniere mit dem Fahrzeugaufbau verbunden mit den entsprechenden Nachteilen, die vorstehend erläutert wurden.

Aus der US 3,263,725 ist eine Schraubenmutterverbindung bekannt, bei der zwischen den zu befestigenden Teile und der Mutter zwei Unterlegscheiben anzuordnen sind, die jeweils zusammenwirken und eine Sperrverzahnung aufweisen. Der Schraubenkopf ist jedoch mit keinerlei Sperrverzahnung versehen.

Aus der DE 20 2007 008 534 U1 ist eine Sicherheitsschraube mit einem Schraubenkopf bekannt, an dem ein Gewindeschaft angeordnet ist, wobei der Schraubenkopf mit einer Werkzeugaufnahme versehen ist, in der ein Einsatz angeordnet ist in Kugelgestalt. Diese Schraube soll insbesondere Einsatz finden bei Zaunanlagen, Gittern zur Absicherung von Fenstern, Türen und Schächten und dgl. und verhindern, dass nachträglich die Sicherheitsschraube gelöst wird. Weitere Hinweise auf Einsätze, um eine zollsichere Herrichtung von Straßenfahrzeugen und Behältern mit wärmegedämmten Aufbau herbeizuführen, sind dieser Druckschrift nicht zu entnehmen.

Es ist Aufgabe der vorliegenden Erfindung, einen Nutzfahrzeugaufbau zur Verfügung zu stellen mit einer zollsicheren Befestigung einer Tür an einem Wandungsteil des Nutzfahrzeugaufbaus, die den Anforderungen des Leitfadens "Zollsichere Herrichtung von Straßenfahrzeugen und Behältern mit wärmegedämmtem Aufbau" entspricht, jedoch in montagefreundlicher Weise realisiert werden kann.

Zur Lösung dieser Aufgabe zeichnet sich der Nutzfahrzeugaufbau der eingangs genannten Art dadurch aus, dass ein Türscharnier der Tür über eine Schraubverbindung mit einem Wandungsteil des Nutzfahrzeugaufbaus verbunden ist und dass die Schraubverbindung eine Schraube mit einem Schraubenkopf und mit einer daran vorgesehenen Sperrverzahnung und mit einer Unterlegscheibe mit einer weiteren Sperrverzahnung umfasst, wobei die Sperrverzahnung der Schraube und die Sperrverzahnung der Unterlegscheibe einander zugewandt zusammenwirken, und wobei der Schraubenkopf einen ringförmigen glatten Außenbereich aufweist und eine Ausnehmung zum Einführen eines Montagewerkzeuges aufweist, wobei die Ausnehmung durch eine verliersicher eingebrachte Sicherungskugel die Schraube gegen eine Demontage sichert, und wobei die Unterlegscheibe an ihrer der Sperrverzahnung gegenüberliegenden, dem Türscharnier zugewandten Auflagefläche eine Verrippung aufweist und die Verrippung durch mit Abstand zueinander vorgesehene Stege im Verlaufe der Montage der Schraube (10) in den Werkstoff des Türscharniers eindrückbar ist.

Damit ist eine Verbindung des Türscharniers mit einem Wandungsteil des Nutzfahrzeugaufbaus möglich, bei denen über die Schraube und die Unterlegscheibe über die jeweiligen Sperrverzahnungen eine Zollverschraubung mit Rastgeometrie verwirklicht ist, die im Rahmen einer üblichen Montage eines Nutzfahrzeugaufbaus mit Türscharnieren und einer Tür erfolgen kann. Dazu erfordert es lediglich die Werkzeuge, die üblicherweise bei der Montage eines Nutzfahrzeugaufbaus bereitzustellen sind.

Eine Kombination verschiedener Metallwerkstoffe ist hierbei durchaus möglich und führt zu keinerlei besonderen Nachbearbeitungen bzw. zu späteren Korrosionserscheinungen.

Bei einer Montage z. B. einer Türschraube mit Unterlegscheibe wird die Unterlegscheibe, z. B. insbesondere dann, wenn auf der im Wandungsteil bzw. dem Türscharnier zugewandten Seite der Unterlegscheibe eine Verrippung vorgesehen ist, in die Oberfläche des darunter liegenden Materials, beispielsweise des Türflügels eingedrückt, womit eine weitere Verdrehung der Scheibe, insbesondere ein Rückdrehen, verhindert ist. Durch die Sperrverzahnung, bei der die Sperrklinken in eine Drehrichtung wirken, ist sichergestellt, dass auch der Schraubenkopf nach der Montage nicht verdreht werden kann.

Durch die zusätzliche Sicherungskugel, die vorzugsweise mittels einer Pressverbindung in die Innensechskantausnehmung dauerhaft eingebracht ist, ist eine unbemerkte Demontage der Schraube nahezu unmöglich. Auf alle Fälle ist sichergestellt, dass der Versuch einer Demontage der Schraube einer Zerstörung der Schraube gleichkommt, was optisch sofort wahrnehmbar wäre und im Übrigen auch einen entsprechenden Zeitaufwand verursachen würde, um die Zerstörung der Schraube vorzunehmen. Damit ist den Anforderungen des Leitfadens "Zollsichere Herrichtung von Straßenfahrzeugen und Behältern mit wärmegedämmtem Aufbau" voll entsprochen, gleichwohl jedoch der Herstellungs- und Montageaufwand für diese zollsichere Befestigung von Türscharnieren an Nutzfahrzeugaufbauten, insbesondere auch an wärmegedämmten Sattelanhängern und Wechselkoffern, wesentlich verringert.

Zur weiteren Erläuterung der Erfindung wird auf weitere Ansprüche, die nachfolgende Beschreibung und die Zeichnung verwiesen. In der Zeichnung zeigen:
- Fig. 1: ausschnittsweise eine perspektivische Ansicht des Heckbereiches eines Ausführungsbeispiels eines Nutzfahrzeugaufbaus mit einer aufschwenkbaren Doppeltür;
- Fig. 2: eine vergrößerte Ansicht des Ausführungsbeispiels nach Fig. 1 im Bereich des Hecktürscharniers;
- Fig. 3: in Einzeldarstellung perspektivisch eine Schraube mit Unterlegscheibe und Sicherungskugel des Ausführungsbeispiels nach Fig. 1;
- Fig. 4: die Teile nach Fig. 3 im montierten Zustand mit Darstellung des Scharnierflügels und der Hecktür, und
- Fig. 5: perspektivisch ausschnittsweise die Schraube mit der Unterlegscheibe vor einer Montage.

In der Zeichnung sind grundsätzlich übereinstimmende Teile mit übereinstimmenden Bezugsziffern versehen.

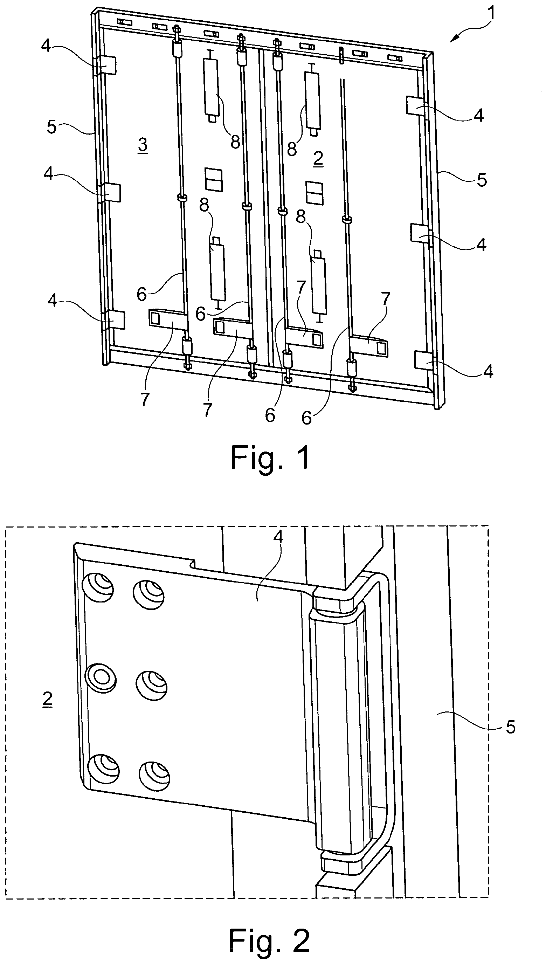

Fig. 1 zeigt die Heckwand 1 eines ansonsten nicht näher dargestellten Ausführungsbeispiels eines Nutzfahrzeugaufbaus, die zwei Türen 2 und 3 aufweist, die über Türscharniere 4 aufzuschwenken sind. Diese Türscharniere 4 sind an Rahmenteilen 5 befestigt. Die Türen 2 und 3 sind über Sperrstangen 6 zu verriegeln nach entsprechender Betätigung von Hebeln 7. Die Türen 2 und 3 selber weisen noch Entlüftungsklappen 8 auf.

In Fig. 2 ist ein Türscharnier 4 für die Tür 2 gezeigt, das insgesamt zwei Reihen von Bohrungen aufweist mit jeweils drei Bohrungen, in die eine Schraubverbindung einzuführen ist, um den Flügel des Türscharniers 4 mit der Tür 2 zu verbinden.

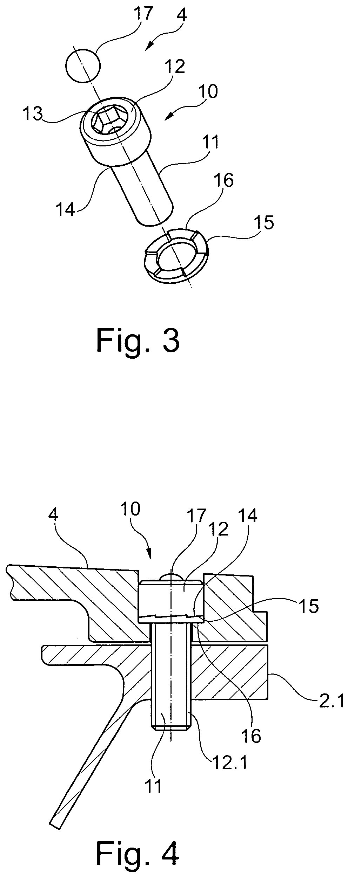

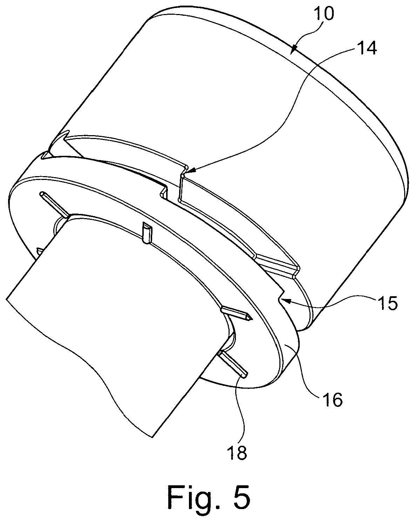

Dazu weist die Schraubverbindung 9 (Fig. 3) eine Schraube 10 auf mit einem Schraubenschaft 11 und einem Schraubenkopf 12, der eine Innensechskantausnehmung 13 aufweist. Das Gewinde am Schraubenschaft 11 ist nicht näher dargestellt, sondern mit 12.1 in Fig. 4 eingezeichnet. Die Schraube 10 ist in eine Metalleinlage 2.1 der Tür 2 einzuschrauben. An seiner Außenumfangfläche ist der Schraubenkopf 12 glatt ausgebildet, hat jedoch an seiner Unterseite eine Sperrverzahnung 14. Diese Sperrverzahnung 14 ist auch näher den Fig. 4 und Fig. 5 zu entnehmen. Diese Sperrverzahnung 14 des Schraubenkopfes 12 wirkt zusammen mit einer weiteren Sperrverzahnung 15, die an der Unterlegscheibe 16 vorgesehen ist. Die Sperrverzahnungen 15 und 14, die im montierten Zustand (Fig. 4) aufeinanderliegen, wirken unmittelbar zusammen.

In die Innensechskantausnehmung 13 ist eine Sicherungskugel 17 einzupressen, die zusätzlich oder alternativ auch noch eingeklebt werden kann, nachdem die Montage bzw. Verschraubung des Scharniers vorgenommen wurde.

Wie Fig. 5 zu entnehmen ist, ist an der Unterlegscheibe 16 mit der Verzahnung 15 noch eine Verrippung 18 in Gestalt von stegartigen Rippen vorgesehen, die sich bei der Montage der Schraube 10 und der Unterlegscheibe 16 in das Obermaterial der Tür 2 hineindrücken.

## Patentansprüche

1. Nutzfahrzeugaufbau mit Seitenwandungen, einer Stirnwand, einer Heckwand sowie mit zumindest einer über Türscharniere (4) schwenkbeweglichen, insbesondere in der Heckwand angeordneten Tür (2, 3) zur Begrenzung eines Laderaumes, wobei die Tür (2, 3) über zumindest ein Türscharnier (4) an einem Aufbauteil des Fahrzeugaufbaus festgelegt ist, wobei ein Türscharnier (4) der Tür (2, 3) über eine Schraubverbindung mit einem Aufbauteil des Nutzfahrzeugaufbaus verbunden ist, **dadurch gekennzeichnet, dass** die Schraubverbindung eine Schraube (10) mit einem Schraubenkopf (12) mit einer daran vorgesehenen Sperrverzahnung (14) und mit einer Unterlegscheibe (16) mit einer weiteren Sperrverzahnung (15) umfasst, wobei die Sperrverzahnung (14) der Schraube (10) und die Sperrverzahnung (15) der Unterlegscheibe (16) einander zugewandt zusammenwirken, und wobei der Schraubenkopf (12) einen ringförmigen glatten Außenbereich aufweist und eine Ausnehmung (13) zum Einführen eines Montagewerkzeuges aufweist, wobei die Ausnehmung (13) durch eine verliersicher eingebrachte Sicherungskugel (17) die Schraube (16) gegen eine Demontage sichert, und wobei die Unterlegscheibe (16) an ihrer der Sperrverzahnung (15) gegenüberliegenden, dem Türscharnier (4) zugewandten Auflagefläche eine Verrippung (18) aufweist und die Verrippung (18) durch mit Abstand zueinander vorgesehene Stege im Verlaufe der Montage der Schraube (10) in den Werkstoff des Türscharniers (4) eindrückbar ist.

2. Nutzfahrzeugaufbau nach Anspruch 1, **dadurch gekennzeichnet, dass** die Schraube (10) der Schraubverbindung eine an einem Schraubenschaft (11) vorgesehenes Außengewinde (12.1) aufweist und in die Tür (2, 3) oder in eine Einlage (2.1) der Tür (2, 3) des Nutzfahrzeugaufbaus einschraubbar ist.

3. Nutzfahrzeugaufbau nach Anspruch 1, **dadurch gekennzeichnet, dass** die Sicherungskugel (17) verliersicher in die Ausnehmung (13) eingepresst ist.

4. Nutzfahrzeugaufbau nach einem der Ansprüche 1 bis 5, **dadurch gekennzeichnet, dass** die Tür (2, 3) des Nutzfahrzeugaufbaus eine Einlage (2.1) aufweist, in die ein Scharnierflügel des Türscharniers (4) eingebracht ist.

5. Nutzfahrzeug nach einem der Ansprüche 1 bis 6, **dadurch gekennzeichnet, dass** die Schraube (10) und/oder die Unterlegscheibe (16) aus unterschiedlichen Metallwerkstoffen bestehen.

6. Nutzfahrzeugaufbau nach einem der Ansprüche 1 bis 7, **dadurch gekennzeichnet, dass** die Sicherungskugel (17) in der Ausnehmung (13) durch Verpressen gegen ein unbemerktes Lösen gesichert ist.

## Claims

1. Commercial vehicle body comprising side walls, a front wall, a rear wall and at least one door (2, 3) for delimiting a load space, which door is pivotable via door hinges (4) and is in particular arranged in the rear wall, the door (2, 3) being fixed via at least one door hinge (4) to a body component of the vehicle body, a door hinge (4) of the door (2, 3) being connected to a body component of the commercial vehicle body via a screw connection, **characterized in**
**that** the screw connection comprises a screw (10) having a screw head (12) with a locking toothing (14) provided thereon and having a washer (16) comprising a further locking toothing (15), the locking toothing (14) of the screw (10) and the locking toothing (15) of the washer (16) interacting so as to face one another, and the screw head (12) having an annular smooth outer region and a recess (13) for inserting an assembly tool, the recess (13) securing the screw (16), so as to prevent disassembly, with a captively introduced securing ball (17), and the washer (16) having a ribbing (18) on its support surface opposite the locking toothing (15) and facing the door hinge (4), and it being possible for the ribbing (18) to be pressed into the material of the door hinge (4) by projections provided at a distance from one another in the course of the assembly of the screw (10).

2. Commercial vehicle body according to claim 1, **characterized in that** the screw (10) of the screw connection has an external thread (12.1) provided on a screw shaft (11) and can be screwed into the door (2, 3) or into an insert (2.1) of the door (2, 3) of the commercial vehicle body.

3. Commercial vehicle body according to claim 1, **characterized in that** the securing ball (17) is captively pressed into the recess (13).

4. Commercial vehicle body according to any of claims 1 to 5,
**characterized in that** the door (2, 3) of the commercial vehicle body has an insert (2.1) into which a hinge leaf of the door hinge (4) is introduced.

5. Commercial vehicle according to any of claims 1 to 6,
**characterized in that** the screw (10) and/or the washer (16) are made of different metal materials.

6. Commercial vehicle body according to any of claims 1 to 7,
**characterized in that** the securing ball (17) is secured in the recess (13) by pressing so as to prevent an unnoticed release.

## Revendications

1. Carrosserie de véhicule utilitaire comportant des parois latérales, une paroi frontale, une paroi arrière et comportant au moins une porte (2, 3) pouvant pivoter par l'intermédiaire de charnières de porte (4) et en particulier disposée dans la paroi arrière, pour la délimitation d'un espace de chargement, la porte (2, 3) étant fixée par l'intermédiaire d'au moins une charnière de porte (4) à une partie de carrosserie de la carrosserie de véhicule, une charnière de porte (4) de la porte (2, 3) étant reliée à une partie de carrosserie de la carrosserie de véhicule utilitaire par l'intermédiaire d'une liaison vissée, **caractérisée en ce que** la liaison vissée comprend une vis (10) comportant une tête de vis (12) comportant une denture de blocage (14) prévue sur celle-ci et comportant une rondelle (16) comportant une autre denture de blocage (15), la denture de blocage (14) de la vis (10) et la denture de blocage (15) de la rondelle (16) coopérant en étant orientées l'une vers l'autre, et la tête de vis (12) présentant une zone extérieure annulaire lisse et un évidement (13) pour l'insertion d'un outil de montage, l'évidement (13) fixant la vis (16), pour éviter un démontage, par une bille de fixation (17) insérée de manière à ne pas se perdre, et la rondelle (16) présentant un nervurage (18) sur sa surface d'appui opposée à la denture de blocage (15) et orientée vers la charnière de porte (4), et le nervurage (18) pouvant être enfoncé dans le matériau de la charnière de porte (4) par des traverses prévues de manière espacée les unes par rapport aux autres au cours du montage de la vis (10).

2. Carrosserie de véhicule utilitaire selon la revendication 1,
**caractérisée en ce que** la vis (10) de la liaison vissée présente un filetage extérieur (12.1) prévu au niveau d'une tige de vis (11) et peut être vissée dans la porte (2, 3) ou dans un insert (2.1) de la porte (2, 3) de la carrosserie de véhicule utilitaire.

3. Carrosserie de véhicule utilitaire selon la revendication 1,
**caractérisée en ce que** la bille de fixation (17) est enfoncée dans l'évidement (13) de manière à ne pas se perdre.

4. Carrosserie de véhicule utilitaire selon l'une des revendications 1 à 5, **caractérisée en ce que** la porte (2, 3) de la carrosserie de véhicule utilitaire présente un insert (2.1) dans lequel un battant de charnière de la charnière de porte (4) est inséré.

5. Véhicule utilitaire selon l'une des revendications 1 à 6,
**caractérisé en ce que** la vis (10) et/ou la rondelle (16) sont constituées de matériaux métalliques différents.

6. Carrosserie de véhicule utilitaire selon l'une des revendications 1 à 7, **caractérisée en ce que** la bille de fixation (17) est fixée dans l'évidement (13) par pressage pour éviter un détachement de manière inaperçue.
